# EUROPÄISCHE PATENTANMELDUNG

(11) **EP 0 821 174 A1**
(43) Veröffentlichungstag der Anmeldung: **28.01.1998**
(21) Anmeldenummer: 97112531.5
(22) Anmeldetag: 22.07.1997
(51) Int. Cl.: F16D 15/00, F16D 21/04, G05G 11/00, B60P 3/16

(54) **Stellvorrichtung**

(30) Priorität: 22.07.1996 DE 19629443
(71) Anmelder: meflex Telecontrol GmbH & Co., D-35630 Ehringshausen (DE)
(72) Erfinder: Abendroth, Bernd, 35641 Schöffengrund (DE); Reinstädtler, Richard, 35102 Lohra (DE); Reinhardt, Günter, 35614 Asslar-Werdorf (DE)
(74) Vertreter: Müller, Eckhard, Dr.

(57) **Zusammenfassung**

Die Erfindung betrifft eine Stellvorrichtung mit einem Stellglied (2), einem vom Stellglied (2) betätigbaren Übertragungsglied (3) und einer zwischen Stellglied (2) und Übertragungsglied (3) vorgesehenen, durch die Bewegung eines Kupplungsschaltgliedes (4) ein- und ausrückbaren Kupplung. Um eine Betätigung von zwei verschiedenen Orten aus ohne großen Kraftaufwand zu ermöglichen, ist es vorgesehen, daß wenigstens ein weiteres mit dem Übertragungsglied (3) vermittels der Kupplung zusammenwirkendes Stellglied (5) vorgesehen ist, wobei das Kupplungsschaltglied (4) derart ausgebildet ist, daß bei eingerückter Kupplung zwischen dem ersten Stellglied (2) und dem Übertragungsglied (3) die Kupplung zwischen dem zweiten Stellglied (5) und dem Übertragungsglied (3) ausgerückt ist und umgekehrt.

## Beschreibung

Die Erfindung bezieht sich auf eine Stellvorrichtung gemäß dem Oberbegriff des Anspruches 1.

Eine Stellvorrichtung der eingangs genannten Art ist aus der EP-B1 0 053 215 bekannt. Diese Stellvorrichtung weist zusätzlich eine Rückstelleinrichtung auf, welche ein, bspw. auf einen Hydraulikantrieb bei Baumaschinen, wie bspw. Rüttelwalzen einwirkendes Übertragungsglied in eine vorgegebene Stellung zurückzustellen trachtet, um eine mit Sicherheitsabschaltung des Fahrantriebes bewirken.

Bei einem Betonmischfahrzeug wird zum Betätigen der für die Drehung der Betontrommel vorgesehenen Hydraulikpumpe eine mechanisch-flexible Fernbetätigung eingesetzt, welche über ein, bspw. am Fahrzeugheck angeordnetes Gebergeräte betätigt wird. Häufig sind derartige Gebergeräte auch in der Fahrzeugkabine angeordnet, um die Hydraulikpumpe, bspw. zum Entleeren der Betontrommel, auch vom Führerhaus bedienen zu können, sofern dies baustellenseitig möglich ist. In diesem Fall ist der von der Fahrzeugkabine ausgehende Betätigungszug und derjenige vom Fahrzeugheck kommende Betätigungszug synchron an die Hydraulikpumpe geschaltet. Dies hat zur Folge, daß bei Betätigung des einen Gebers der andere Geber zwangsweise mit betätigt wird, wodurch eine Schwergängigkeit bzw. einen Verlust an Wirkleistung gegeben ist.

Davon ausgehend liegt der Erfindung die Aufgabe zugrunde, eine Stellvorrichtung der eingangs genannten Art anzugeben, welche eine Betätigung von zwei verschiedenen Orten aus ohne großen Kraftaufwand erlaubt.

Diese Aufgabe wird gelöst durch die Merkmale des Anspruches 1.

Durch die Erfindung ist eine leichtgängige Betätigung von Aggregaten, wie bspw. Hydraulikpumpen von zwei verschiedenen Orten aus ermöglicht, wobei bei einer Betätigung des einen Stellgliedes das jeweils andere entsprechend der Stellung des Kupplungsgliedes sich außer Wirkstellung mit dem auf das Aggregat einwirkende Übertragungsglied befindet. Die Kupplungseinrichtung ermöglicht ein wechselseitiges, zwangsgesteuertes bzw. zwangsläufiges Ein- und Auskuppeln von Stellgliedern und Übertragungsteil.

Ausgestaltungen der Erfindung sind Gegenstand weiterer Ansprüche.

Weitere Ziele, Vorteile, Merkmale und Anwendungsmöglichkeiten der vorliegenden Erfindung ergeben sich aus der nachfolgenden Beschreibung der Ausführungsbeispiele anhand der Zeichnungen. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Es zeigen:
- Figur 1: ein Betonmischfahrzeug mit einer erfindungsgemäßen Stellvorrichtung,
- Figur 2: eine Stellvorrichtung gemäß Figur 1 in einer Schnittdarstellung,
- Figur 3: die Verstellvorrichtung gemäß Figur 2 in einer Seitenansicht,
- Figur 4: die Stellvorrichtung gemäß Figur 2 in einer Draufsicht,
- Figur 5: einen Schnitt durch die Stellvorrichtung gemäß Figur 2 mit eingerückter Kupplung bzgl. des einen Stellgliedes,
- Figur 6: einen Schnitt durch die Stellvorrichtung gemäß Figur 2, jedoch in ausgerückter Kuppelstellung des einen Stellgliedes,
- Figur 7: eine weitere Ausführungsform einer erfindungsgemäßen Stellvorrichtung, teilweise geschnitten,
- Figur 8: die Stellvorrichtung gemäß Figur 7 in einer Draufsicht und
- Figur 9: die Stellvorrichtung gemäß Figur 7 in einer Seitenansicht.

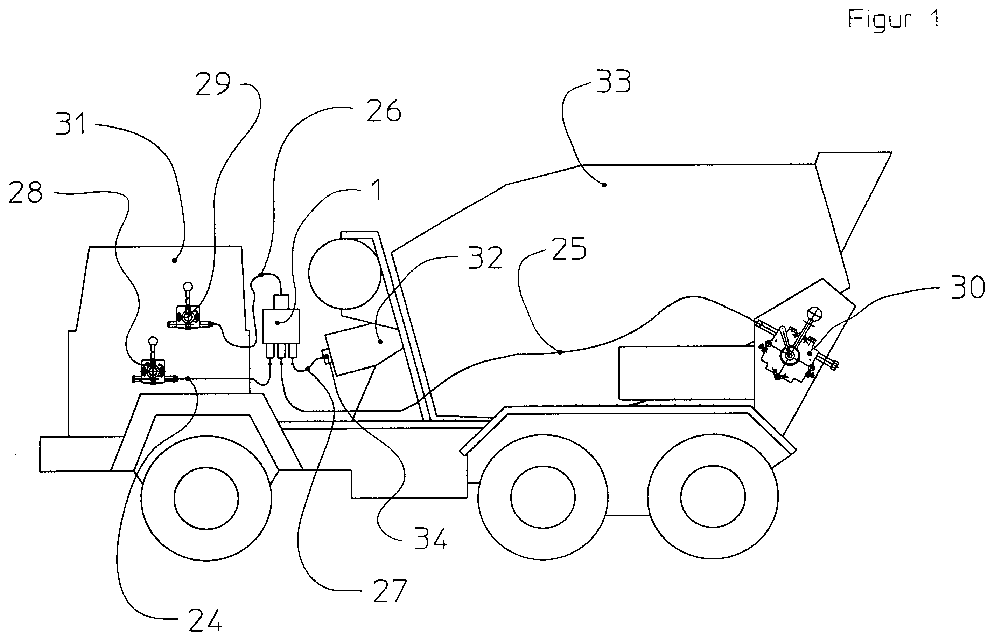

Das Betonmischfahrzeug gemäß Figur 1 weist einen Hydraulikantrieb 32 zur Drehung der den Beton aufnehmenden Trommel 33 auf. Der Hydraulikantrieb 32 wird über den (nicht gesondert angezogenen) Motor des Fahrzeuges antrieben. Um den Hydraulikantrieb 32 für eine Links- oder Rechtsdrehung der Trommel 33 mit unterschiedlicher Drehzahl zum Mischen und Entleeren des Betons aus der Trommel 33 anzusteuern, ist eine Stelleinrichtung 1 vorgesehen, welche alternativ über ein in der Fahrzeugkabine 31 angeordnetes Gebergerät 28 und ein am Fahrzeugheck angeordnetes Gebergerät 30 vermittels von Fernbetätigungen 24, 25 betätigbar ist. Die Stellvorrichtung 1 weist, wie noch weiter unten näher erläutert, eine Kupplung auf, derart, daß sich bei Betätigung des einen Gebers 28 bzw. 30 der jeweils andere Geber 30 bzw. 28 nicht in Wirkstellung befindet und damit nicht zwangsläufig mitbetätigt werden kann. Das Umschalten der Kupplung von dem einen Geber 28 auf den anderen Geber 30 erfolgt mittels eines weiteren Gebers 29, welcher über einen Betätigungszug 26 an die Stellvorrichtung 1 anschließt. Hierdurch ist es auch möglich, bei einem Abstellen des Fahrzeuges den Geber 30 am Fahrzeugheck durch Umschalten auf den Geber 28 unwirksam zu schalten, so daß keine unbefugte Betätigung des Hydraulikantriebes 32 von außen möglich ist.

Bei dem hier gewählten Ausführungsbeispiel erfolgt die Verstellung des Hydraulikaggregates ebenfalls über einen Betätigungszug 27, welcher an die Regelwelle 34 des Antriebes 32 anschließt. Selbstverständlich ist es auch möglich, daß die Verstellvorrichtung 1 unmittelbar auf die mit Bezugszeichen 34 angezogene Regelwelle für die Verstellung der Drehzahl und Rechts- oder Linkslauf der Trommel 33 des Hydraulikantriebes 32 einwirkt.

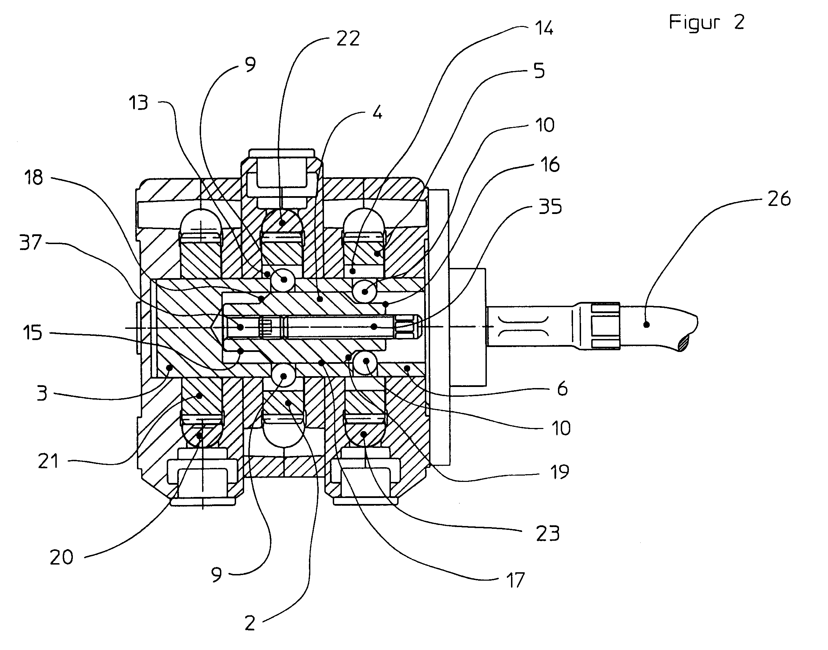

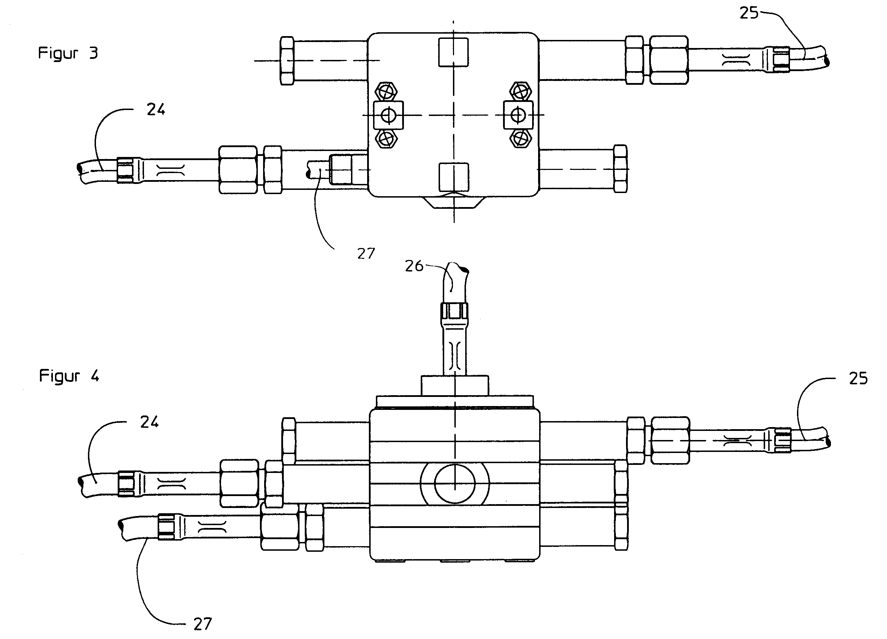

Die Verstellvorrichtung gemäß Figuren 2 bis 6 weist zwei als Zahnräder ausgebildete Stellglieder 2, 5 auf, welche in einer Stellung frei drehbar um ein zylindrisches Übertragungsglied 3 gelagert sind. Die Stellglieder bzw. die Zahnräder 2, 5 stehen mit Zahnstangen 22, 23 in Eingriff, an welchen die Betätigungszüge 24, 25 angelenkt sind. Auf dem einen Ende des Übertragungsgliedes 3 ist ein Zahnrad 21 drehfest angeordnet, welches mit einer Zahnstange 20 zusammenwirkt. Diese Zahnstange 20 ist wiederum mit dem Betätigungszug 27 verbunden, welcher, wie oben bereits beschrieben, auf die Regelwelle 34 des Hydraulikantriebes zur Verstellung der Drehzahl und für eine Links- und Rechtsdrehung der Trommel 33 einwirkt.

Innerhalb eines hohlzylindrischen Abschnittes 6 des Übertragungsgliedes 3 ist ein Kupplungsschaltglied 4 axial verschieblich geführt, welches bewirkt, daß bei eingerückter Kupplung bzw. formschlüssiger Verbindung zwischen dem einen Stellglied 2 und dem Übertragungsglied 3 das weitere Stellglied 5 auf dem Übertragungsglied 3 ohne Wirkverbindung frei drehbar ist und umgekehrt.

Für die drehfeste Verbindung des jeweiligen Stellgliedes 2, 5 mit dem Übertragungsglied 3 sind Kupplungsglieder 9, 10 vorgesehen, welche bei dem hier gewählten Ausführungsbeispiel als Kugeln ausgebildet sind. Selbstverständlich ist es auch möglich, den Kupplungsgliedern andere Wälzkörperformen zu geben. Die Kupplungsglieder 9, 10 sind in einer Querbohrung 11, 12 des hohlzylindrischen Abschnittes 6 des Übertragungsgliedes 3 radial beweglich aufgenommen. Für die Erzeugung der formschlüssigen Verbindung rasten die Kugelglieder 9, 10 in zugeordnete Vertiefung 13, 14 an den Lagerflächen 7, 8 des jeweiligen Stellgliedes 2, 5 ein und können in der entkuppelten Stellung aus diesen Vertiefungen 13, 14 ausweichen.

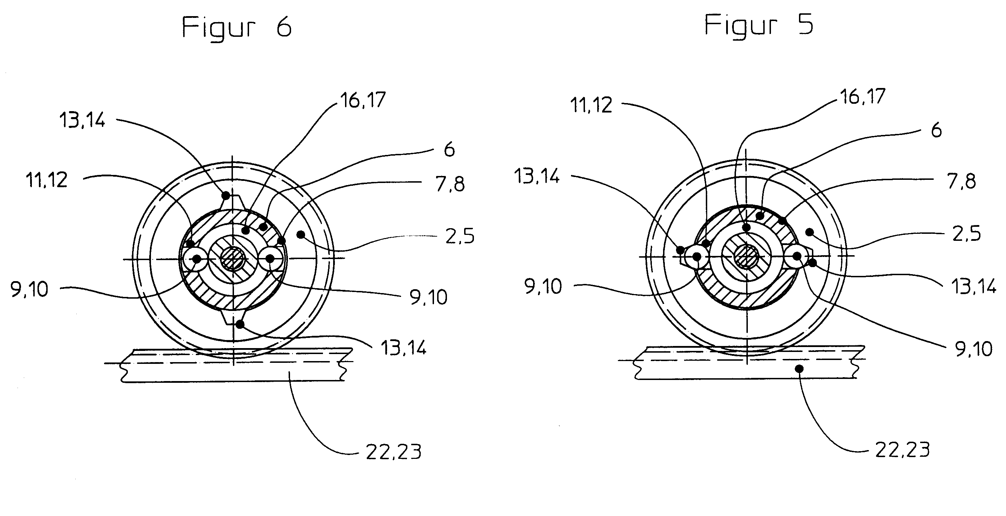

Zur Ausführung dieser Schaltbewegungen weist das Kupplungsschaltglied zwei im Durchmesser reduzierte Anlageflächen 15, 16 auf, an welchen die Kupplungsglieder 9, 10 in der jeweils ausgerückten Kupplungsstellung aufliegen. Zwischen diesen beiden Anlageflächen 15, 16 befindet sich eine an die Mantelfläche des Hohlzylinders 6 angrenzende zylindrische Anlagefläche 17, mittels welcher das entsprechende Kupplungsglied 9 bzw. 10 zur Herstellung der formschlüssigen Verbindung in der zugeordneten Vertiefung 13 bzw. 14 des jeweiligen Stellgliedes 2, 5 gehalten ist. Wird nun das Kupplungsschaltglied 4 von der in Figur 2 dargestellten Schaltstellung bzgl. des hohlzylindrischen Abschnittes 6 in axialer Richtung nach rechts geschoben wird, gleiten die Kupplungsglieder 10 bzw. die Kugeln entlang der konischen Anlaufschräge 19 und wandern radial nach außen, bis sie von der zylindrischen Anlagefläche 17 des Kupplungsschaltgliedes 4 in die Vertiefungen 14 an der Lagerfläche 8 des Verstellgliedes 5 einrastet und in dieser Stellung gehalten sind. Gleichzeitig mit dieser axialen Verschiebung des Schaltgliedes 4 wandern die Kupplungsglieder 9 aus den Vertiefungen 13 an der Lagerfläche 7 des Stellgliedes 2 längs der konischen Anlaufschräge 18 nach radial innen, bis die Kupplungsglieder 9 in der Querbohrung 11 des Stellgliedes 2 aufgenommen sind und damit die drehfeste Verbindung aufgehoben ist. Dieser Sachverhalt des Kuppelns und Entkuppelns ist beispielhaft in Figuren 5 und 6 dargestellt.

Für die axiale Bewegung des Kupplungschaltgliedes 4 bzgl. des hohlzylindrischen Abschnittes 6 des Übertragungsgliedes 3 ist ebenfalls eine mechanisch-flexible Fernbetätigung 26 vorgesehen, welche über einen Anschlußbolzen 35 in einer Bohrung 37 des Kupplungsschaltgliedes 4 gehalten, bspw. eingeschraubt ist.

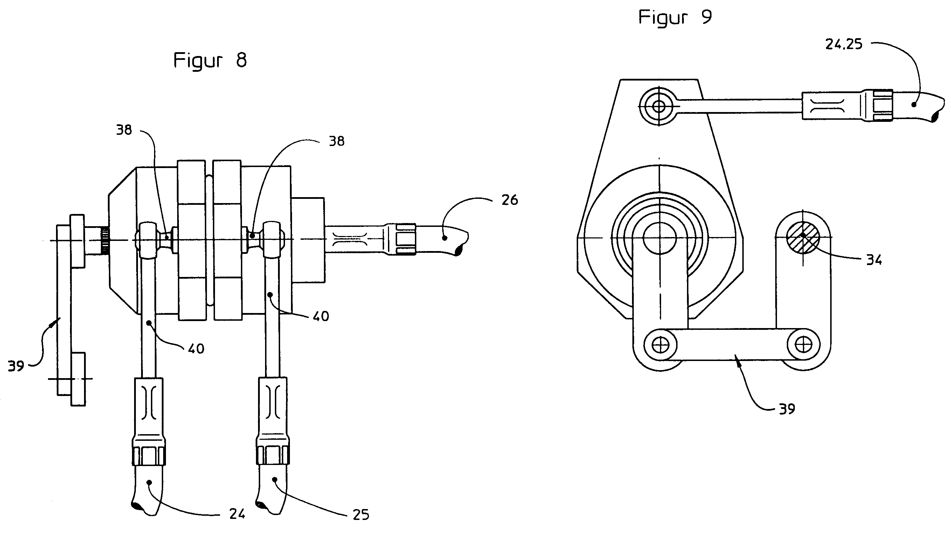

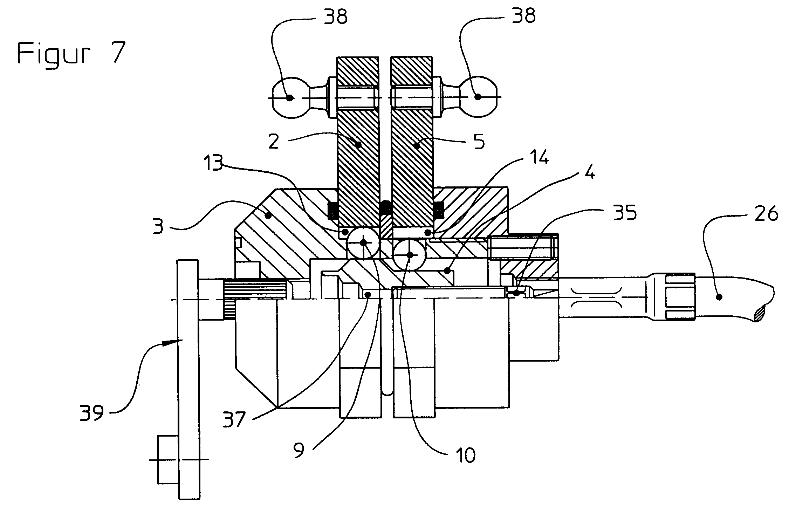

Eine weitere Ausführungsform einer Stellvorrichtung ist in Figuren 7 bis 9 dargestellt, wobei identische Bauteile mit gleichen Bezugszeichen versehen sind. Der Unterschied der Ausführungsform gemäß Figuren 7 bis 9 gegenüber der oben beschriebenen besteht einmal darin, daß anstelle von Zahnrad-Zahnstangen-Paaren bei den Stellglieder 2, 5 nunmehr Schwenkhebel vorgesehen sind, wobei die Betätigungszüge 24, 25 mittels Stangengelenken 40 an Winkelgelenken 38 angelenkt sind. Ein weiterer Unterschied besteht darin, daß das Übertragungsglied 3 direkt über ein Hebelgelenk 39 auf die Regelwelle 34 des Hydraulikantriebes 32 einwirkt. Selbstverständlich ist es auch möglich, daß die Stellvorrichtung 1 bzw. das Übertragungsglied 3 unmittelbar an die Regelwelle 34 des Hydraulikantriebes 32 angeflanscht ist.

Die Erfindung ist mit Vorteil auch für die Lenkung bei Motorjachten einsetzbar, mit der Möglichkeit der Lenkung von Haupt. und Nebenfahrständen.

### Bezugszeichenliste

- 1: - Stellvorrichtung
- 2: - Stellglied, Zahnrad
- 3: - Übertragungsglied
- 4: - Kupplungsschaltglied
- 5: - Stellglied, Zahnrad
- 6: - Abschnitt
- 7: - Lagerfläche
- 8: - Lagerfläche
- 9: - Kupplungsglied
- 10: - Kupplungsglied
- 11: - Querbohrung
- 12: - Querbohrung
- 13: - Vertiefung
- 14: - Vertiefung
- 15: - Anlagefläche
- 16: - Anlagefläche
- 17: - Anlagefläche
- 18: - Anlaufschräge
- 19: - Anlaufschräge
- 20: - Zahnstange
- 21: - Zahnrad
- 22: - Zahnstange
- 23: - Zahnstange
- 24: - Fernbetätigung
- 25: - Fernbetätigung
- 26: - Fernbetätigung
- 27: - Fernbetätigung
- 28: - Geber
- 29: - Geber
- 30: - Geber
- 31: - Fahrzeugkabine
- 32: - Hydraulikpumpe
- 33: - Trommel
- 34: - Regelwelle
- 35: - Anschlußbolzen
- 37: - Bohrung
- 38: - Winkelgelenk
- 39: - Hebelgelenk
- 40: - Stangengelenk

## Patentansprüche

1. Stellvorrichtung mit einem Stellglied (2), einem vom Stellglied (2) betätigbaren Übertragungsglied (3) und einer zwischen Stellglied (2) und Übertragungsglied (3) vorgesehenen, durch die Bewegung eines Kupplungsschaltgliedes (4) ein- und ausrückbaren Kupplung, dadurch gekennzeichnet, daß wenigstens ein weiteres mit dem Übertragungsglied (3) vermittels der Kupplung zusammenwirkendes Stellglied (5) vorgesehen ist, wobei das Kupplungsschaltglied (4) derart ausgebildet ist, daß bei eingerückter Kupplung zwischen dem ersten Stellglied (2) und dem Übertragungsglied (3) die Kupplung zwischen dem zweiten Stellglied (5) und dem Übertragungsglied (3) ausgerückt ist und umgekehrt.

2. Stellvorrichtung nach Anspruch 1, dadurch gekennzeichnet, daß das Übertragungsglied (3) und das jeweilige Stellglied (2, 5)in ausgerückter Stellung der Kupplung frei gegeneinander verdrehbar und in Kupplungsstellung drehfest miteinander verbunden sind.

3. Stellvorrichtung nach Anspruch 1 oder 2, dadurch gekennzeichnet, daß die Kupplung für eine formschlüssige Verbindung zwischen den jeweiligen Stellgliedern (2, 5) und dem Übertragungsglied (3) ausgebildet ist.

4. Stellvorrichtung nach einem der Ansprüche 1 bis 3, dadurch gekennzeichnet, daß das Übertragungsglied (3) ein hohlzylindrischen Abschnitt (6) aufweist, auf welchem die wenigstens zwei Stellglieder (2, 5) mit zylindrischen Lagerflächen (7, 8) verdrehbar gelagert sind, und die Kupplung jeweils wenigstens ein jedem Stellglied (2, 5) zugeordnetes Kupplungsglied (9, 10) aufweist, welches jeweils in einer Querbohrung (11, 12) des Hohlzylinders (6) radial beweglich aufgenommen und bei einer bzgl. des Hohlzylinders (6) axialen Verschiebung des Kupplungsschaltgliedes (4) in eine erste Schaltstellung in eine zugeordnete Vertiefung (13, 14) an der Lagerfläche (7, 8) des jeweiligen Verstellgliedes (2, 5) eingerastet gehalten und in einer zweiten Schaltstellung des Kupplungsschaltgliedes (4) aus dieser Vertiefung (13, 14) ausweichen kann, während in dieser zweiten Stellung das Kupplungsglied (4) des weiteren Stellgliedes (5) in die Raststellung übergeht.

5. Stellvorrichtung nach einem der vorhergehenden Ansprüche, dadurch gekennzeichnet, daß das Kupplungsschaltglied (4) axial beweglich in dem Hohlzylinder (6) des Übertragungsgliedes (3) geführt ist und zwei im Abstand der Stellglieder (2, 5) angeordnete, im Durchmesser reduzierte Anlageflächen (15, 16) für die Kupplungsglieder (9, 10) in der jeweils ausgerückten Kupplungsstellung und eine im Durchmesser etwa an die innere Mantelfläche des Hohlzylinders (6) angrenzende zylindrische Anlagefläche (17) aufweist, mittels welcher das jeweilige Kupplungsglied (9, 10) in eingerückter Stellung der Kupplung in der zugeordneten Vertiefung (13, 14) des jeweiligen Stellgliedes (2, 5) gehalten ist.

6. Stellvorrichtung nach einem der vorhergehenden Ansprüche, dadurch gekennzeichnet, daß die zylindrischen Anlageflächen (15, 16, 17) des Kupplungsschaltgliedes (4) vermittels konischen Anlaufschrägen (18, 19) ineinander übergehen.

7. Stellvorrichtung nach einem der vorhergehenden Ansprüche, dadurch gekennzeichnet, daß das Übertragungsglied (4) ein mit einer Zahnstange (20) zusammenwirkendes Zahnrad (21) aufweist.

8. Stellvorrichtung nach einem der vorhergehenden Ansprüche, dadurch gekennzeichnet, daß die wenigstens zwei Stellglieder (2, 5) als Zahnräder ausgebildet sind, welche mit zugeordneten Zahnstangen (22, 23) zusammenwirken.

9. Stellvorrichtung nach einem der vorhergehenden Ansprüche, dadurch gekennzeichnet, daß die Stellglieder (2, 5) als Schwenkhebel ausgebildet sind.

10. Stellvorrichtung nach einem der vorhergehenden Ansprüche, dadurch gekennzeichnet, daß an den Zahnstangen (20, 22, 23) bzw. den Schwenkhebeln und/oder dem Kupplungsschaltglied (4) mechanische Fernbetätigungen (24, 25, 26, 27) angelenkt sind, welche vorzugsweise mittels Gebereinrichtungen (28, 29, 30) betätigbar sind.

11. Fahrzeug, wie bspw. Betonmischfahrzeug gekennzeichnet durch eine Verstelleinrichtung (1) gemäß den vorstehenden Ansprüchen, wobei ein Geber (28) zu Betätigung eines der Stellglieder (2, 5) der Verstellvorrichtung (1) und ein Geber (29) zur Betätigung des Kupplungsschaltgliedes (4) in der Fahrzeugkabine (31) und ein Geber (30) zur Betätigung des weiteren Stellgliedes (2 bzw. 5) außerhalb der Fahrzeugkabine (31), bspw. am Fahrzeugheck angeordnet sind und die Stellbewegungen vermittels mechanischer Fernbetätigungen (24, 25, 26, 27) erfolgen.
